# EUROPÄISCHE PATENTSCHRIFT

(11) **EP 2 025 988 B1**
(45) Veröffentlichungstag und Bekanntmachung des Hinweises auf die Patenterteilung: **08.04.2015**
(21) Anmeldenummer: 07114226.9
(22) Anmeldetag: 13.08.2007
(51) Int. Cl.: F16L 33/22, F16L 37/138, F16L 37/12

(54) **Fitting für ein Rohr, insbesondere Kunststoffrohr oder Kunststoff-Metall-Verbundrohr**
Fitting for a pipe, in particular plastic pipe or plastic-metal composite pipe
Raccord pour un tuyau, en particulier un tuyau en plastique ou un tuyau composite en plastique et métal

(43) Veröffentlichungstag der Anmeldung: 18.02.2009
(73) Patentinhaber: Uponor Innovation AB, 73061 Virsbo (SE)
(72) Erfinder: Zischke, Georg, 97332, Volkach (DE)
(74) Vertreter: Epping - Hermann - Fischer

(56) Entgegenhaltungen:
- EP-A- 1 288 554
- DE-U1-202004 016 128
- GB-A- 2 081 831
- US-A- 4 212 487
- US-A1- 2004 195 831
- US-B1- 6 343 630

## Beschreibung

Die Erfindung betrifft einen Fitting für ein Rohr, bei dem es sich insbesondere um ein Kunststoffrohr oder Kunststoff-Metall-Verbundrohr handelt.

Rohranschlussfittingsysteme sind in den unterschiedlichsten Ausgestaltungen bekannt. Es existieren Fittinge, bei denen das anzuschließende Rohrende unter Verwendung einer plastisch verformbaren, gestauchten Presshülse radial gegen einen Stützkörper gedrückt gehalten wird. Darüber hinaus existieren Klemmfittinge, bei denen ein geschlitzter Klemmring beispielsweise durch Aufschrauben einer Überwurfmutter auf den Fittingkörper radial von außen gegen das anzuschließende Rohrende unter Verengung des Klemmrings gedrückt wird. Schließlich sind auch sogenannte Schiebehülsen-Fittinge bekannt, bei denen ein voraufgeweitetes Rohr mit Hilfe einer axial verschiebbaren Hülse, deren Innendurchmesser gegenüber dem Außendurchmesser des aufgeweiteten Rohrendes ein Untermaß aufweist, radial gegen ein Stützkörper des Fittingkörpers gestaucht wird. Nachteilig bei dieser Verbindungstechnik ist, dass das anzuschließende Rohrende aufgeweitet werden muss, was einen zusätzlichen Arbeitsgang bedeutet.

Aus DE-A-41 41 310 ist es bekannt, außen auf das anzuschließende Rohrende eine verformbare Hülse aufzusetzen, über die dann die Schiebehülse axial gezogen wird. Durch Verformung der verformbaren Quetschhülse kommt es dann zu der gewünschten Verpressung des Rohrendes mit dem Fittingkörper. Bei dieser Technik nachteilig ist die Tatsache, dass eine relativ große Kraft aufgewendet werden muss, um die allseits geschlossene Quetschhülse stauchen zu können.

Aus der gattungsbildenden US 2004/0195831 A1 und der EP 1288554 A1 sind des Weiteren verformbare Hülsen bekannt, die Entkerbungen oder Schlitze aufweisen und über die ebenfalls die Schiebehülse axial gezogen wird. Eine Verpressung der verformbaren Quetschhülsen wird dadurch erreicht. Es bleibt jedoch nachteilig, dass trotz Materialeinsparung weiterhin eine relativ große Kraft aufgewendet werden muss, um die Quetschhülse zur Verpressung verformen zu können.

Aufgabe der Erfindung ist es, einen Fitting für ein Rohr, insbesondere Kunststoffrohr oder Kunststoff-Metall-Verbundrohr zu schaffen, der eine einfache Montage erlaubt und eine zuverlässige Verpressung des Rohrendes durch axiales Verschieben einer Schiebehülse ermöglicht.

Zur Lösung dieser Aufgabe wird mit der Erfindung nach Anspruch 1 ein Fitting für ein Rohr, insbesondere Kunststoffrohr oder Kunststoff-Metall-Verbundrohr vorgeschlagen, der versehen ist mit
- einem Fittingkörper, der eine Stützhülse mit einem freien Ende aufweist, auf das ein anzuschließendes Rohr aufschiebbar ist,
- mehreren Klemmsegmenten, die in Umfangsrichtung benachbart und im wesentlichen konzentrisch um die stützhülse herum angeordnet und in Richtung auf die Stützhülse und von dieser weg bewegbar an dem Fittingkörper gelagert sind,
- wobei die Klemmsegmente in Klemmeingriff mit dem anzuschließenden, auf die Stützhülse geschobenen Rohr bringbare Innenseiten und sich zum freien Ende der Stützhülse verjüngende Außenseiten aufweisen, und
- einer axial zur Stützhülse bewegbaren, am Fittingkörper geführten und die Klemmsegmente von außen umgebenden Aktivierungshülse mit einer Innenseite, die zum Bewegen der Klemmsegmente in Richtung auf die Stützhülse mit den Außenseiten der Klemmsegmente zusammenwirken.

Der erfindungsgemäße Fitting weist einen Fittingkörper mit einer Stützhülse auf, die mit einem freien Ende versehen ist, auf das ein anzuschließendes Rohr aufgeschoben wird. Im wesentlichen konzentrisch und im Abstand zur Stützhülse befinden sich einzelne, voneinander getrennte, radial zueinander bewegbare Klemmsegmente, die in Umfangsrichtung benachbart angeordnet sind und mit einer schrägverlaufenden Außenseite versehen sind, wodurch sich die Klemmsegmente zum freien Ende der Stützhülse hin verjüngen. Über die Klemmsegmente lässt sich eine Schiebe- bzw. Aktivierungshülse axial schieben, die eine konisch sich aufweitende Innenseite aufweist. Mit dieser sich konisch aufweitenden Innenseite wird die Aktivierungshülse bei auf die Stützhülse aufgeschobenem Rohr, welches von den Klemmsegmenten umgeben ist, auf die Klemmsegmente aufgeschoben, die sich infolge dessen radial auf die Stützhülse zu bewegen und dabei das sich auf der Stützhülse befindende Rohrende gegen die Stützhülse pressen. Von besonderer Bedeutung hierbei ist, dass die Klemmsegmente, die gegeneinander einen Abstand aufweisen, sich wie die Spannbacken des Spannfutters einer Bohrmaschine oder einer Drehbank bzw. wie die Segmente einer Segmentpresse radial aufeinander zu bewegen. Dadurch, dass die Klemmsegmente voneinander beabstandet sind, bewegen sie sich radial zueinander, ohne dass es zu Quetschungen von Materialabschnitten zwischen den Klemmsegmenten kommen kann, wie dies beispielsweise bei einer Quetschhülse der Fall ist, die entweder über ihre gesamte axiale Erstreckung in Umfangsrichtung geschlossen ist oder aber über einen Teil ihrer axialen Erstreckung geschlitzt ist.

Die Klemmsegmente werden zweckmäßigerweise am Fittingkörper geführt, wenn sie sich auf das festzuklemmende Rohrende zu bewegen. Dies erfolgt dadurch , dass die Klemmsegmente an ihren einen Enden einen Wulst am Fittingkörper umgreifen oder aber über einen Innenvorsprung in eine Umfangsnut des Fittingkörpers eingreifen.

In vorteilhafter Weiterbildung der Erfindung ist vorgesehen, dass die Aktivierungshülse in ihrer Aktivierungsposition, in der ihre Innenseite an den Außenseiten der Klemmsegment zum Drücken derselben in Richtung auf die Stützhülse anliegen, gegen unbeabsichtigte axiale Bewegungen am Fittingkörper oder an den Klemmsegmenten gesichert ist. Diese Sicherungsmaßnahme ist insbesondere unter dem Aspekt von Vorteil, dass bei Erschütterungen, die auf den Fittingkörper wirken können, die Aktivierungshülse wegen ihrer schrägverlaufenden Innenseite von den an ihren Außenseiten schrägverlaufenden Klemmsegmenten abrutschen könnte. Die Sicherung der Aktivierungshülse kann durch einen Reibschluss oder einen Formschluss erfolgen. Auch ist es möglich, dass die Neigungswinkel der Innenseite der Aktivierungshülse und der Außenseiten der Klemmhülse innerhalb des Selbsthemmungswinkelbereichs bis zu 7° zur Axialerstreckung der Hülse liegen.

In vorteilhafter Weiterbildung der Erfindung ist ferner vorgesehen, dass um die Stützhülse herum drei oder vier Klemmsegmente angeordnet sind. Wie bereits oben erwähnt, sind diese Klemmsegmente voneinander beabstandet, damit sie sich zum Verklemmen und Verpressen des anzuschließenden Rohres frei radial auf die Stützhülse zu bewegen können, ohne daran durch gegenseitige Anlage gehindert zu sein.

Schließlich ist es zweckmäßig, wenn die Klemmsegmente an ihren dem freien Ende der Stützhülse zugewandten sich verjüngenden Enden innenliegende Einlauf-Schrägflächen aufweisen. Diese Einlauf-Schrägflächen unterstützen ein Auseinanderbewegen der Klemmsegmente durch das anzuschließende Rohrende, wenn dieses in den Bereich zwischen den Klemmsegmenten und die Stützhülse geschoben wird.

Wie bereits oben erwähnt, nimmt die Aktivierungshülse eine Aktivierungsposition ein, in der die Klemmsegmente ihre Klemmkraft auf das anzuschließende Rohrende ausüben. In einer anderen axialen Position, nämlich der Freigabeposition, gibt die Aktivierungshülse die Klemmsegmente frei, d.h. wirkt nicht auf sie ein. In dieser Freigabeposition befindet sich die Aktivierungshülse in Verlängerung der Stützhülse, mit deren freien Ende sich die Aktivierungshülse noch überlappt. Auch in dieser Freigabeposition kann die Aktivierungshülse zweckmäßigerweise gegen ein weiteres Abziehen vom Fittingkörper an diesem gesichert sein.

Die Erfindung wird nachfolgend unter Bezugnahme auf ein Ausführungsbeispiel und anhand der Zeichnung näher erläutert. Im einzelnen zeigen dabei:
- Fig. 1: einen Längsschnitt durch einen Fitting gemäß einem ersten Ausführungsbeispiel in seiner Vormontagestellung,
- Fig. 2: einen Längsschnitt durch den Fitting gemäß Fig. 1 in seiner Position, in der ein anzuschließendes Rohr einschiebbar ist, wobei dieses Rohr in Fig. 2 dargestellt ist,
- Fig. 3: einen Längsschnitt durch den Fitting gemäß Fig. 1 bei eingeschobenem Rohr und bei in ihrer Freigabeposition befindlicher Aktivierungshülse,
- Fig. 4: einen Längsschnitt durch den Fitting im angeschlossenen Zustand des Rohres mit in ihrer Aktivierungsposition befindlicher Aktivierungshülse,
- Fig. 5: eine perspektivische Darstellung eines Klemmsegments, wie es bei dem Fitting der Fign. 1 bis 4 Verwendung findet, und
- Fign. 6 und 7: Querschnitte entlang der Ebenen VI-VI und VII-VII gemäß Fign. 3 bzw. 4.

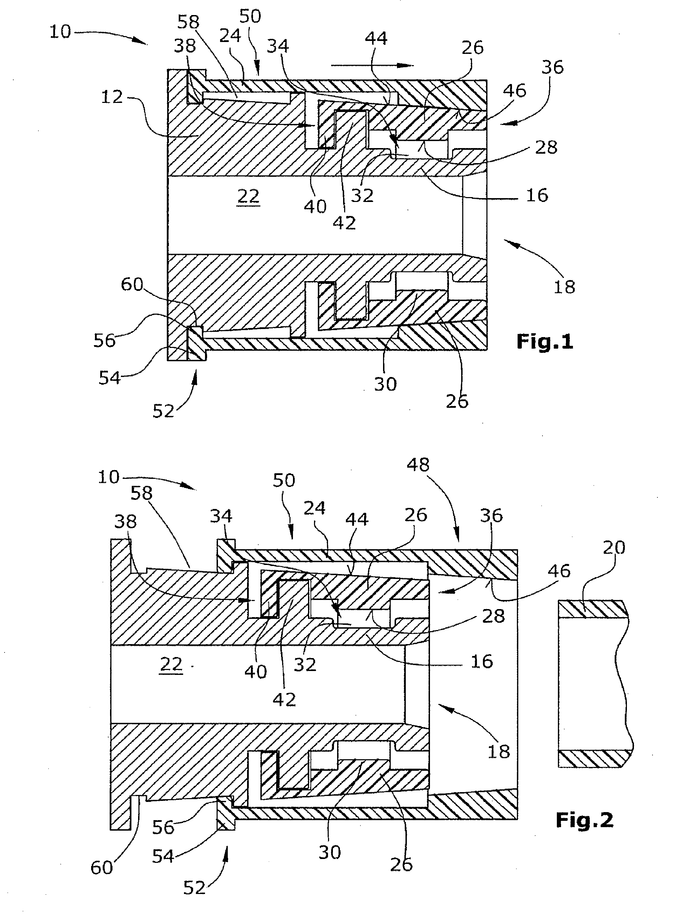

In den Fign. 1 bis 4 sind Längsschnitte durch einen Fitting 10 gemäß einem Ausführungsbeispiel der Erfindung gezeigt. Der Fitting 10 weist einen Fittingkörper 12 mit einer Stützhülse 16 auf, die mit einem freien Ende 18 versehen ist, über das ein anzuschließendes Rohr 20 (siehe Fig. 2) aufschiebbar ist. Die Stützhülse 16 kann ein Dichtelement (z.B. O-Ring) aufweisen. Durch den Fittingkörper 12 erstreckt sich ein Fluiddurchlass 22. Der Fittingkörper 12 kann als Wandscheibe, T- oder Winkelstück o.dgl. Verbindungselement ausgebildet sein.

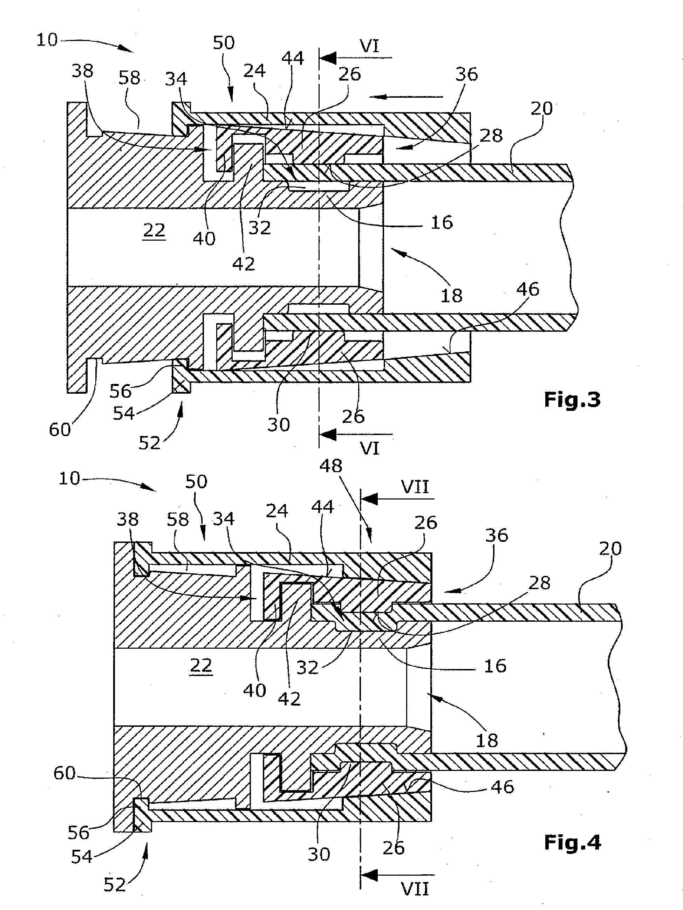

Konzentrisch zur Stützhülse 16 befindet sich eine Aktivierungshülse 24, die axial zwischen einer Aktivierungsposition (beispielsweise in Fig. 4 zu erkennen) und einer Freigabeposition (beispielsweise in Fig. 2 zu erkennen) am Fittingkörper 12 bewegbar geführt ist.

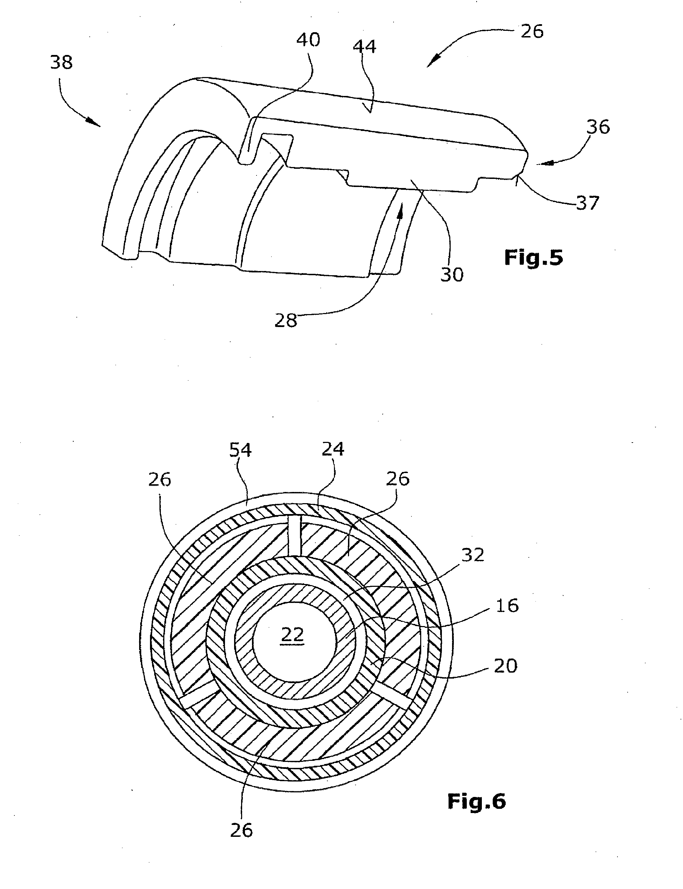

Im Bereich zwischen der Aktivierungshülse 24 und der Stützhülse 16 befinden sich in diesem Ausführungsbeispiel drei Spann- bzw. Klemmsegmente 26, von denen eines in Fig. 5 perspektivisch dargestellt ist. Die Klemmsegmente 26 sind mit im wesentlichen zylindrischen Innenflächen 28 versehen, die eine Erhebung 30 aufweisen, welche einer korrespondierenden Vertiefung 32 in der Außenseite 34 der Stützhülse gegenüberliegen. Die Klemmsegmente 26 sind in Umfangsrichtung beabstandet voneinander und radial beabstandet zur Stützhülse 16 angeordnet. Sie weisen freie Ende 36 auf, die im Bereich des freien Endes 18 der Stützhülse 16 angeordnet sind und Innenschrägflächen 37 aufweisen. An den gegenüberliegenden Enden 38 weisen die Klemmsegmente 26 Umgreifvorsprünge 40 auf, mit denen sie einen Ringwulst 42 des Fittingkörpers 12 umgreifen.

Die Außenflächen 44 der Klemmsegmente 26 sind konisch sich zu den freien Enden 36 hin verjüngend ausgebildet, während die Aktivierungshülse 24 eine komplementäre sich konisch verjüngende Innenseite 46 aufweist. Diese konisch sich verjüngende Innenseite 46 ist innerhalb desjenigen Abschnitts 48 der Aktivierungshülse 24 ausgebildet, der sich in der Freigabeposition gemäß beispielsweise Fig. 2 außerhalb der Klemmsegmente 26 und in der Aktivierungsposition gemäß beispielsweise Fig. 4 um die Klemmsegmente 26 herum befindet. Im übrigen Bereich 50 weist die Aktivierungshülse 24 eine im wesentlichen zylindrische Innenseite auf, die gegenüber der konisch sich verjüngenden Innenseite 46 radial nach außen vorspringt. An den Abschnitt 50 der Aktivierungshülse 24 schließt sich an ihrem axialen Ende 52 ein Außenflansch 54 an, in dessen Bereich die Aktivierungshülse 24 an ihrer Innenseite einen Innenwulst 56 aufweist, der innerhalb einer Außenvertiefung 58 des Fittingkörpers axial vor- und zurückbewegbar ist und ein weiteres axiales Auseinanderbewegen von Fittingkörper 12 und Aktivierungshülse 24 in deren Freigabeposition verhindert.

Die Funktionsweise des Fittings 10 gemäß den Fign. 1 bis 4 ist nun wie folgt.

In der Vormontageposition weist der Fitting 10 den Zustand gemäß Fig. 1 auf. Um nun ein Rohr 20 anschließen zu können, muss zunächst die Aktivierungshülse 24 in ihre Freigabeposition gemäß Fig. 2 axial verschoben werden. Nunmehr kann das Rohr 20 in die über das freie Ende 18 der Stützhülse 16 vorstehende Aktivierungshülse 24 und weiter zwischen die Klemmsegmente 26 und die Stützhülse 16 geschoben werden, wie es in Fig. 3 gezeigt ist. Aus dieser Position heraus wird nun die Aktivierungshülse 24 in ihre Aktivierungsposition gemäß Fig. 4 verschoben. Hierbei legt sich die konische Innenseite 46 der Aktivierungshülse 24 von außen an die konischen Außenseiten 44 der Klemmsegmente 26 an. Mit zunehmender Verschiebung der Aktivierungshülse 24 werden die Klemmsegmente 26 weiter radial in Richtung auf das auf der Stützhülse 16 befindliche Ende des Rohres 20 geschoben und pressen sich immer weiter gegen dieses Rohrende, wobei die Wandung des Rohrendes durch die Vorsprünge 30 der Klemmsegmente 26 in die Umfangsvertiefung 32 der Stützhülse 16 hineingedrückt wird. Diese Situation ist in Fig. 4 dargestellt, die den Fitting 10 mit sich in der Aktivierungsposition befindlicher Aktivierungshülse 24 zeigt. In dieser Aktivierungsposition ist die Aktivierungshülse 24 gegen unbeabsichtigte axiale Zurückbewegungen durch den Innenwulst 56 gesichert, der in eine Umfangsvertiefung 60 des Fittingkörpers 12 eingetaucht ist. In diesem Ausführungsbeispiel kommt es zu einer Art Formschluss zwischen Rohr 20 und Fitting 10. Es ist aber ebenso möglich, dass das Rohr 20 durch die Klemmsegmente 26 lediglich radial gestaucht wird, ohne dass die Wandung des Rohres 20 zusätzlich in eine Vertiefung in der Stützhülse 16 oder en Klemmsegmenten 26 gedrückt wird (Reibschluss).

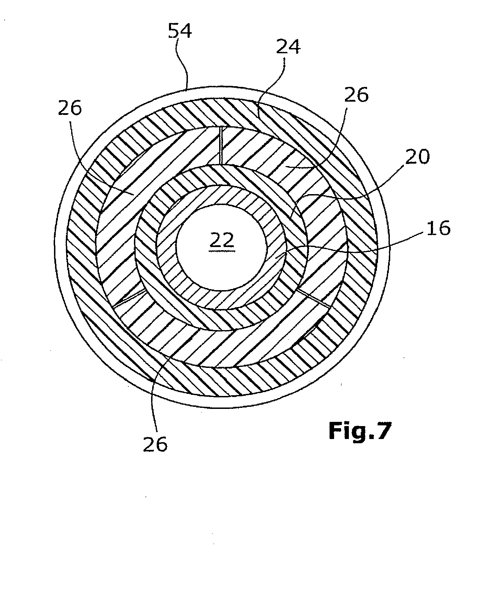

Die Fign. 5 bis 7 zeigen zum einen eines der Klemmsegmente 26 und zum anderen deren Zusammenwirken und Positionen vor und nach der Verschiebung der Aktivierungshülse 24 aus deren Freigabeposition in die Aktivierungsposition. Zu Erkennen ist, dass die Klemmsegmente 26 bei axialer Verschiebung der Aktivierungshülse 24 eine radial einwärts gerichtete Bewegung vollführen, um radial von außen das Rohr 20 gegen die Stützhülse 16 zu pressen. Benachbarte Klemmsegmente 26 sind dabei zweckmäßigerweise stets auf Abstand angeordnet, so dass ihre Radialbewegung nicht durch gegenseitige Kontaktierung behindert ist.

## Patentansprüche

1. Fitting für ein Rohr, insbesondere Kunststoff oder Kunststoff-Metall-Verbundrohr, mit
- einem Fittingkörper (12), der eine Stützhülse (16) mit einem freien Ende (18) aufweist, auf das ein anzuschließendes Rohr (20) aufschiebbar ist,
- Klemmsegmenten (26) wobei die Klemmsegmente (26) in Klemmeingriff mit dem anzuschließenden, auf die Stützhülse (16) geschobenen Rohr (20) bringbare Innenseiten (28) und sich zum freien Ende (18) der Stützhülse (16) verjüngende Außenseiten (44) aufweisen, und
- einer axial zur Stützhülse (16) bewegbaren, am Fittingkörper (12) geführten und die Klemmsegmente (26) von außen umgebenden Aktivierungshülse (24) mit einer Innenseite (46), die zum Bewegen der Klemmsegmente (26) in Richtung auf die Stützhülse (16) mit den Außenseiten (44) der Klemmsegmente (26) zusammenwirkt, **dadurch gekennzeichnet, dass**
die Klemmsegmente einzelne, voreinander getrennte, radial zueinander bewegbare Klemmsegmente (26) sind, die in Umfangsrichtung benachbart und im wesentlichen konzentrisch um die Stützhülse (16) herum angeordnet und in Richtung auf die Stützhülse (16) und von dieser weg bewegbar an dem Fittingkörper (12) gelagert sind, wobei die Klemmsegmente an ihren dem freien Ende (18) der Stützhülse (16) gegenüberliegenden Enden einen Wulst am Fittingkörper umgreifen oder aber über einen Innenvorsprung in eine Umfangsnut des Fittingkörpers eingreifen.

2. Fitting nach Anspruch 1, **dadurch gekennzeichnet, dass** die Aktivierungshülse (24) am Fittingkörper (12) gegen eine unbeabsichtigte Ablösung gesichert ist.

3. Fitting nach Anspruch 1 oder 2, **dadurch gekennzeichnet, dass** die Aktivierungshülse (24) in einer Aktivierungsposition, in der ihre Innenseite (46) für einen Klemmeingriff der Klemmsegmente (26) mit dem anzuschließenden, auf die Stützhülse (16) geschobenen Rohr (20) von außen gegen die Außenseiten (44) der Klemmsegmente (26) drückt, am Fittingkörper (12) und/oder an den Klemmsegmenten (26) gegen eine unbeabsichtigte Bewegung aus der Aktivierungsposition gesichert ist.

4. Fitting nach einem der Ansprüche 1 bis 3, **dadurch gekennzeichnet, dass** die Neigungswinkel der Außenseiten (44) der Klemmsegmente (26) und der Innenseite (46) der Aktivierungshülse (24) zur Axialerstreckung der Stützhülse (16) innerhalb eines Selbsthemmungswinkelbereichs liegen.

5. Fitting nach einem der Ansprüche 1 bis 4, **dadurch gekennzeichnet, dass** mindestens drei oder vier Klemmsegmente (26) vorgesehen sind.

6. Fitting nach einem der Ansprüche 1 bis 5, **dadurch gekennzeichnet, dass** die Klemmsegmente (26) an ihren dem freien Ende (18) der Stützhülse (16) zugewandten Enden (36) innenliegende Einlauf-Schrägflächen (37) aufweisen.

7. Fitting nach einem der Ansprüche 1 bis 6, **dadurch gekennzeichnet, dass** die Stützhülse (16) ein Dichtelement zur Anlage an dem anzuschließenden Rohr (20) aufweist.

8. Fitting nach einem der Ansprüche 1 bis 7, **dadurch gekennzeichnet, dass** die Stützhülse (16) mindestens eine Umfangsvertiefung (32) aufweist und dass die Klemmsegmente (26) mit zu der Umfangsvertiefung (32) korrespondierenden Innenvorsprüngen (30) an ihren Innenseite (28) versehen sind.

## Claims

1. Fitting for a pipe, in particular a plastic or plastic-metal composite pipe, comprising
- a fitting body (12) which has a supporting sleeve (16) with a free end (18) onto which a pipe (20) to be connected can be pushed,
- clamping segments (26), wherein the clamping segments (26) have inner sides (28) which can be brought into clamping engagement with the pipe (20) to be connected which is pushed onto the supporting sleeve (16), and outer sides (44) tapering towards the free end (18) of the supporting sleeve (16), and
- an activation sleeve (24) which can be moved axially with respect to the supporting sleeve (16), is guided on the fitting body (12), surrounds the clamping segments (26) from outside and has an inner side (46) which interacts with the outer sides (44) of the clamping segments (26) in order to move the clamping segments (26) in the direction of the supporting sleeve (16),
**characterized in that** the clamping segments are individual clamping segments (26) which are separate from one another, can be moved radially with respect to one another, are arranged adjacently in the circumferential direction and substantially concentrically about the supporting sleeve (16) and are mounted on the fitting body (12) so as to be moveable in the direction of the supporting sleeve (16) and away therefrom, wherein the clamping segments engage around a bead on the fitting body at their ends which are opposite to the free end (18) of the supporting sleeve (16) or else engage via an inner projection in a circumferential groove of the fitting body.

2. Fitting according to Claim 1, **characterized in that** the activation sleeve (24) is secured on the fitting body (12) against unintentional release.

3. Fitting according to Claim 1 or 2, **characterized in that**, in an activation position in which the inner side (46) of the activation sleeve (24) presses from outside against the outer sides (44) of the clamping segments (26) to achieve a clamping engagement of the clamping segments (26) with the pipe (20) to be connected which is pushed onto the supporting sleeve (16), said activation sleeve (24) is secured on the fitting body (12) and/or on the clamping segments (26) against unintentional movement from the activation position.

4. Fitting according to one of Claims 1 to 3, **characterized in that** the angles of inclination of the outer sides (44) of the clamping segments (26) and of the inner side (46) of the activation sleeve (24) to the axial extent of the supporting sleeve (16) lie within a self-locking angular range.

5. Fitting according to one of Claims 1 to 4, **characterized in that** at least three or four clamping segments (26) are provided.

6. Fitting according to one of Claims 1 to 5, **characterized in that** the clamping segments (26) have internal oblique run-in surfaces (37) at their ends (36) facing the free end (18) of the supporting sleeve (16).

7. Fitting according to one of Claims 1 to 6, **characterized in that** the supporting sleeve (16) has a sealing element for bearing against the pipe (20) to be connected.

8. Fitting according to one of Claims 1 to 7, **characterized in that** the supporting sleeve (16) has at least one circumferential depression (32), and **in that** the clamping segments (26) are provided with inner projections (30) on their inner side (28) which correspond to the circumferential depression (32).

## Revendications

1. Raccord pour un tuyau, en particulier un tuyau en plastique ou un tuyau composite en plastique et métal, comprenant
- un corps de raccord (12) qui comprend une douille de support (16) pourvue d'une extrémité libre (18) sur laquelle un tuyau à raccorder (20) peut être enfilé,
- des segments de serrage (26), les segments de serrage (26) comprenant des côtés intérieurs (28) pouvant être amenés en prise par serrage avec le tuyau (20) à raccorder enfilé sur la douille de support (16) et des côtés extérieurs (44) se rétrécissant vers l'extrémité libre (18) de la douille de support (16), et
- une douille d'activation (24) déplaçable axialement par rapport à la douille de support (16), guidée sur le corps de raccord (12) et entourant les segments de serrage (26) depuis l'extérieur, laquelle douille d'activation est pourvue d'un côté intérieur (46) qui coopère avec les côtés extérieurs (44) des segments de serrage (26) pour déplacer les segments de serrage (26) en direction de la douille de support (16),
**caractérisé en ce que**
les segments de serrage sont des segments de serrage (26) individuels, séparés les uns des autres et déplaçables radialement les uns par rapport aux autres, lesquels sont disposés de manière adjacente dans la direction circonférentielle et de manière essentiellement concentrique autour de la douille de support (16) et sont placés sur le corps de raccord (12) de manière déplaçable en direction de la douille de support (16) et à l'écart de celle-ci, les segments de serrage venant en prise autour d'un bourrelet sur le corps de raccord à leurs extrémités opposées à l'extrémité libre (18) de la douille de support (16) ou encore venant en prise par le biais d'une saillie intérieure dans une rainure circonférentielle du corps de raccord.

2. Raccord selon la revendication 1, **caractérisé en ce que** la douille d'activation (24) est fixée sur le corps de raccord (12) de manière à empêcher un détachement imprévu.

3. Raccord selon la revendication 1 ou 2, **caractérisé en ce que** la douille d'activation (24) est, dans une position d'activation dans laquelle son côté intérieur (46) presse depuis l'extérieur contre les côtés extérieurs (44) des segments de serrage (26) pour une entrée en prise par serrage des segments de serrage (26) avec le tuyau (20) à raccorder enfilé sur la douille de support (16), fixée sur le corps de raccord (12) et/ou sur les segments de serrage (26) de manière à empêcher un déplacement imprévu hors de la position d'activation.

4. Raccord selon l'une quelconque des revendications 1 à 3, **caractérisé en ce que** les angles d'inclinaison des côtés extérieurs (44) des segments de serrage (26) et du côté intérieur (46) de la douille d'activation (24) se situent à l'intérieur d'une plage angulaire d'autoblocage par rapport à l'étendue axiale de la douille de support (16).

5. Raccord selon l'une quelconque des revendications 1 à 4, **caractérisé en ce qu'**au moins trois ou quatre segments de serrage (26) sont prévus.

6. Raccord selon l'une quelconque des revendications 1 à 5, **caractérisé en ce que** les segments de serrage (26) comprennent, à leurs extrémités (36) tournées vers l'extrémité libre (18) de la douille de support (16), des surfaces obliques d'entrée (37) situées à l'intérieur.

7. Raccord selon l'une quelconque des revendications 1 à 6, **caractérisé en ce que** la douille de support (16) comprend un élément d'étanchéité pour l'appui contre le tuyau à raccorder (20).

8. Raccord selon l'une quelconque des revendications 1 à 7, **caractérisé en ce que** la douille de support (16) comprend au moins un évidement circonférentiel (32), et **en ce que** les segments de serrage (26) sont pourvus sur leurs côtés intérieurs (28) de saillies intérieures (30) correspondant à l'évidement circonférentiel (32).
